# EUROPÄISCHE PATENTSCHRIFT

(11) **EP 1 531 067 B1**
(45) Veröffentlichungstag und Bekanntmachung des Hinweises auf die Patenterteilung: **24.02.2010**
(21) Anmeldenummer: 03292841.8
(22) Anmeldetag: 14.11.2003
(51) Int. Cl.: B60H 1/00

(54) **Klimatisierungsvorrichtung, insbesondere für ein Kraftfahrzeug**
Air conditioning system in particular for a motor vehicle
Système de conditionnement d'air en particulier pour véhicule

(43) Veröffentlichungstag der Anmeldung: 18.05.2005
(73) Patentinhaber: Behr France Rouffach SAS, 68250 Rouffach (FR)
(72) Erfinder: Klein, Henri, 68000 Colmar (FR)
(74) Vertreter: Grauel, Andreas

(56) Entgegenhaltungen:
- DE-A- 10 025 334
- DE-A- 10 039 282
- FR-A- 2 773 111
- US-A1- 2002 042 248
- US-B1- 6 231 437

## Beschreibung

Die vorliegende Erfindung betrifft eine Klimatisierungsvorrichtung zur Klimatisierung eines Raumes, insbesondere eines Kraftfahrzeuginnenraumes, mit den Merkmalen des Oberbegriffs des Patentanspruchs 1.

Die Temperatursteuerung bei einer Klimaanlage erfolgt üblicherweise durch Zumischung warmer Luft beziehungsweise durch Erwärmung eines gekühlten Luftstromes mittels einer Heizeinrichtung. Die Heizeinrichtung ist üblicherweise stromabwärts eines Wärmetauschers angeordnet und dient zur variablen Temperatursteuerung der einem Innenraum zugeführten klimatisierten Luft. Zur Klimatisierung mehrerer Raumzonen kann es erforderlich sein, den Luftstrom in unterschiedlicher Weise zu temperieren, so dass für die mehreren Raumzonen unterschiedliche Temperaturenniveaus herstellbar sind. Hierzu sind relativ aufwändige Klappenmechanismen erforderlich, da die Zumischung erwärmter Luft für die unterschiedlichen Temperaturzonen jeweils in unterschiedlicher Menge zu erfolgen hat.

Eine Fahrzeugklimaanlage mit einer mehrzonigen Temperaturregelung ist beispielsweise aus der EP 1 044 833 A2 bekannt. Hierbei ist gegenüber einer einzonigen Klimaanlage die Klinematik zur Zumischung erwärmter Luft in doppelter Ausführung vorgesehen, was den Bauaufwand und die erforderliche Mechanik sowie den Steuerungsmechanismus relativ aufwändig macht.

Ein Luftverteiler einer Heiz-, Lüftungs- und/oder Klimaanlage ist weiterhin aus der DE 100 25 334 A1 bekannt. Auch hierbei wird zur zweizonigen Temperaturregelung eine relativ aufwändige Luftführungssteuerung benötigt, da ansonsten keine saubere Trennung der unterschiedlichen Temperaturzonen möglich ist.

Ferner ist aus der gattungsgemäßen US 6,231,437 eine Klimatisierungsvorrichtung mit eine Kaltluftkanal, einem Warmluftkanal, einem Heizkörper, einer Mischkammer und einer trommelförmigen Mischklappe bekannt.

Der vorliegenden Erfindung liegt die Aufgabe zugrunde, eine Klimaanlage zur Innenraumtemperierung beziehungsweise -klimatisierung zur Verfügung zu stellen, bei der sich die Temperaturen für wenigstens zwei Innenraumzonen in einfacher individuell einstellen lassen.

Diese Aufgabe wird die im Anspruch 1 angegebenen Merkmale gelöst. Vorteilhafte Ausgestaltungen und Weiterbildungen der Erfindung ergeben sich aus den abhängigen Ansprüchen.

Eine erfindungsgemäße Klimatisierungsvorrichtung mit den Merkmalen des Oberbegriffs des Patentanspruchs 1 weist einen sich in wenigstens zwei Zonenkanäle verzweigenden Luftführungskanal auf. Innerhalb eines Zweigkanals ist eine Stelleinrichtung zur zonenindividuellen Temperatursteuerung angeordnet, die aus wenigstens zwei Teilen besteht. Diese Stelleinrichtung ist stromaufwärts oder stromabwärts einer im Zweigkanal befindlichen Heizeinrichtung angeordnet. Während eine im Luftführungskanal angeordnete erste Stelleinrichtung für eine Luftverteilung zwischen dem Zweigkanal und einem Bypasskanal und damit für eine Temperierung der zuvor durch eine Kühleinrichtung geschickten gekühlten Luft sorgt, kann die weitere Stelleinrichtung diesen temperierten Luftstrom zur Förderung in zwei oder mehrere unterschiedliche Innenraumzonen jeweils individuell in seiner Temperatur beeinflussen. Die erste Stelleinrichtung ist vorzugsweise eine Schwenkklappe, insbesondere eine Trommelklappe, die im Luftführungskanal angeordnet ist. Die weiteren Stelleinrichtungen sind als schwenkbare Klappen ausgebildet, mit deren Hilfe der Zweigkanal mit der darin angeordneten Heizeinrichtung variabel verschlossen oder geöffnet werden kann. Bei verschlossenem Zweigkanal strömt die Luft weitgehend durch den Bypasskanal, in dem sich keine Heizeinrichtung befindet, so dass die Luft hierbei stärker gekühlt ist. Bei geöffneter Stelleinrichtung beziehungsweise schwenkbarer Klappe strömt ein Teil der Luft durch die Heizeinrichtung, so dass die Luft hierbei stärker erwärmt wird. Durch die unabhängig ansteuerbaren Stelleinrichtungen im Zweigkanal mit der darin angeordneten Heizeinrichtung können die beiden Temperaturzonen des Innenraums relativ unabhängig voneinander gesteuert werden.

Die im Luftführungskanal angeordnete Stelleinrichtung kann insbesondere auch als schwenkbare Klappe ausgebildet sein, mit deren Hilfe eine variable Verteilung der Luftströmung zwischen den beiden Zweigkanälen ermöglicht ist. Die erste Stelleinrichtung kann beispielsweise eine Trommelklappe sein, deren Schwenkachse ungefähr mittig im Bereich der Kühleinrichtung und quer zu Luftströmungsrichtung angeordnet ist. Hierdurch kann eine strömungsgünstig gestaltete Umlenkeinrichtung zur Verfügung gestellt werden, die eine variable und feinfühlige Verteilung der Luftströmung zwischen erstem und zweitem Zweigkanal ermöglicht.

Eine alternative Ausgestaltung sieht vor, dass von den beiden Schwenkklappen der zweiten Stelleinrichtung nur eine verschwenkbar ist, während die andere starr ist. Auf diese Weise kann die Temperatur für eine Innenraumzone mittels der ersten Stelleinrichtung vorgegeben werden, während mittels der zweiten Stelleinrichtung eine abweichende Temperatur für die zweite Innenraumzone einstellbar ist. Diese Variante vereinfacht den Bauaufwand und damit den Kostenaufwand nochmals erheblich.

Die Erfindung wird nachfolgend in bevorzugten Ausführungsbeispielen anhand der zugehörigen Zeichnungen näher erläutert. Dabei zeigen:
- Figur 1: eine schematische Perspektivdarstellung eines Teils einer erfindungsgemäßen Klimatisierungsvorrichtung mit einer ersten und einer zweiten Stelleinrichtung zur zonenindividuellen Temperatursteuerung wenigstens zweier Innenraumzonen,
- Figuren 2 bis 4: jeweils verschiedene Stellungen der Stelleinrichtungen in schematischen Schnittdarstellungen und
- Figuren 5 und 6: jeweils alternative Varianten der erfindungsgemäßen Klimatisierungsvorrichtung in schematischen Schnittdarstellungen.

Eine erfindungsgemäße Klimatisierungsvorrichtung 10 zur zonenindividuellen Temperatursteuerung wenigstens zweier Innenraumzonen umfasst gemäß dargestelltem Ausführungsbeispiel eine innerhalb eines Luftführungskanals 12 angeordnete Kühleinrichtung 14, die üblicherweise als Verdampfer oder Wärmetauscher ausgebildet ist, der von zu klimatisierender Luft 16 durchströmt wird. Die durch die Kühleinrichtung 14 geblasene Luft 16 wird von einem Axial- oder Radialgebläse (nicht dargestellt) angesaugt und in den Luftführungskanal 12 gefördert. Unmittelbar, hinter der Kühleinrichtung 14 verzweigt sich der Luftführungskanal 12 in einen unteren Zweigkanal 18 und in einen parallelen Bypasskanal 22. Im unteren Zweigkanal 18 ist eine Heizeinrichtung 20 angeordnet, die zur variablen Erwärmung der zuvor mittels der Kühleinrichtung 14 abgekühlten Luft 16 auf eine gewünschte Eintrittstemperatur in den zu klimatisierenden Innenraum 24 dient. Die Heizeinrichtung 20 kann als plattenförmiges, elektrisches Heizelement ausgebildet sein, das die Luft 16 bspw. mittels elektrisch beheizbarer Heizdrähte erwärmt. Alternativ oder zusätzlich kann die Heizeinrichtung 20 ein sog. PTC-Element aufweisen, das für eine schnelle und präzise einstellbare Erwärmung der durch die Heizeinrichtung 20 strömenden Luft 16 sorgen kann.

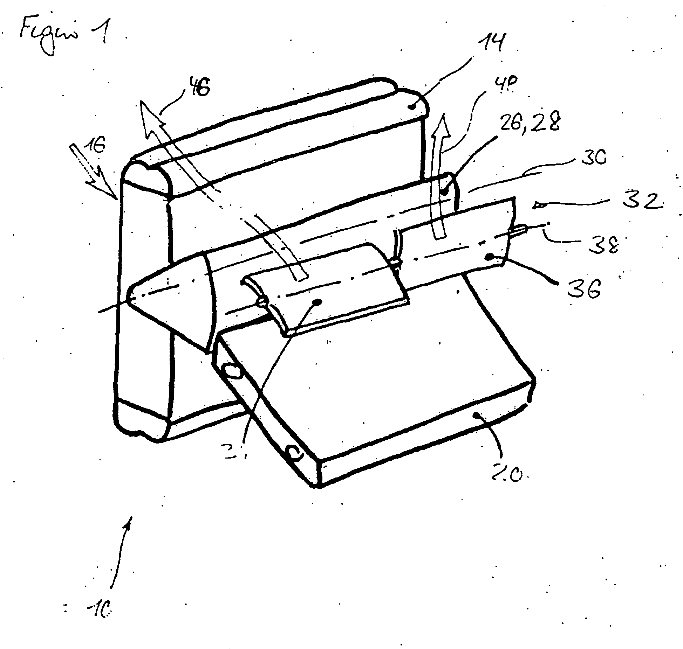

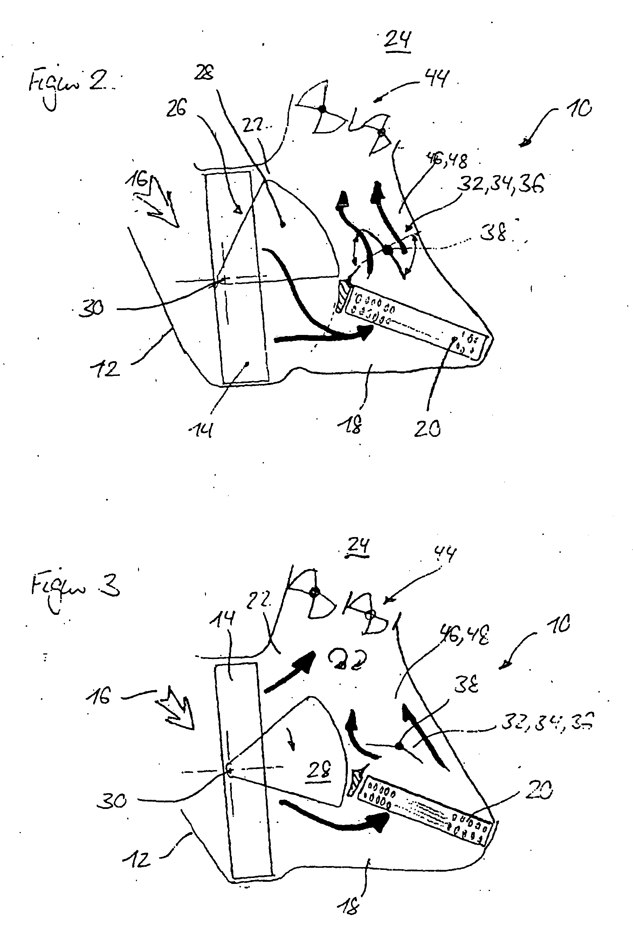

Die in den Figuren 1 bis 4 dargestellte erste Variante der Klimatisierungsvorrichtung 10 - kürzer auch als Klimaanlage bezeichenbar - umfasst eine erste Stelleinrichtung 26 zur Temperierung der Luft 16, die als sog. Trommelklappe 28 ausgebildet ist und die um eine quer zur Luftströmungsrichtung und in horizontaler Richtung angeordnete Schwenkachse 30 innerhalb des Luftführungskanals 12 verschwenkbar ist. Die Figuren 2, 3 und 4 zeigen in schematischen Schnittansichten drei verschiedene Stellungen der schwenkbaren Trommelklappe 28. Die schwenkbare Trommelklappe 28 ist so angeordnet, dass sich ihre Schwenkachse 30 ungefähr mittig innerhalb der Kühleinrichtung 14 bzw. des Verdampfers und quer zur Strömungsrichtung der Luft befindet.

Am Ende des Zweigkanals 18, stromabwärts der Heizeinrichtung 20, ist eine weitere Stelleinrichtung 32 angeordnet, die im gezeigten Ausführungsbeispiel aus zwei Schwenkklappen 34 und 36 besteht, die nebeneinander angeordnet und um eine weitere Schwenkachse 38 verschwenkbar sind. Die beiden Schwenkklappen 34 und 36 sind unabhängig voneinander verschwenkbar und dienen zur zonenindividuellen Temperatursteuerung wenigstens zweier zu klimatisierender Innenraumzonen beziehungsweise zweier Zonenkanäle 46 und 48. In der in Figur 1 gezeigten Mittelstellung der Trommelklappe 28 wird der durch den Bypasskanal 22 strömenden gekühlten Luft erwärmte Luft beigemischt, die durch den Zweigkanal 18 geleitet wird. Die zur ersten Innenraumzone geförderte Luft ist hierbei kühler als die zur zweiten Innenraumzone geförderte Luft, da die linke Schwenkklappe 34 den linken Zweigkanalabschnitt teilweise verschließt, so dass für diesen Zonenkanal 46 Zone mehr Luft durch den Bypasskanal 22 strömt. Die rechte Schwenkklappe 36 ist hingegen weitgehend geöffnet, so dass von den Luftanteilen für die zweite Innenraumzone 48 mehr Teile durch den Zweigkanal 18 strömen können.

Durch Verstellung der Trommelklappe 28 kann die durch den Verdampfer strömende Luft 16 zwischen dem Zweigkanal 18 und dem Bypasskanal 22 variabel aufgeteilt werden. Befindet sich sie schwenkbare Trommelklappe 28 in der obersten Stellung ( Figur 2), so strömt die klimatisierte Luft nach dem Passieren der Kühleinrichtung 14 weitgehend vollständig durch die Heizeinrichtung 20, die für eine variable Erwärmung der Luft sorgt. Die Luft tritt anschließend wieder in den zusammen geführten Luftführungskanal 12 ein. Durch Verstellung der beiden Schwenkklappen 34 und 36 der zweiten Stelleinrichtung 32 kann zudem die Luftverteilung auf beide Innenraumzonen individuell eingestellt werden.

In einem Mischbetrieb befindet sich die Trommelklappe 28 in einer mittleren Stellung, so dass die Luft teilweise durch den Zweigkanal 18 und durch den Bypasskanal 22 strömt. Dieser Mischbetrieb ist in Figur 3 gezeigt. In der Mittelstellung der ersten Stelleinrichtung 26 kann mittels der individuell verstellbaren zweiten Stelleinrichtung 32 am stärksten auf die Temperaturverteilung der beiden Innenraumzonen 46, 48 Einfluss genommen werden, da durch ein Öffnen oder Verschließen einer der beiden Kanalabschnitte für die beiden Innenraumzonen die Warmluftzufuhr zu dieser Zone abgeschwächt und damit die Kaltluftzufuhr verstärkt wird.

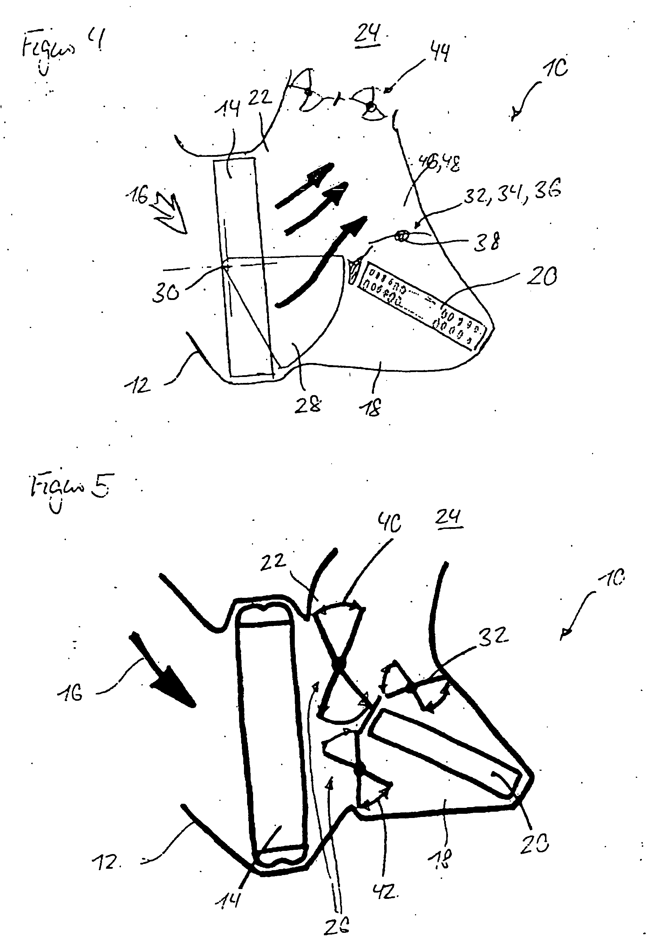

Im Kaltluftbetrieb (Figur 4) befindet sich die Trommelklappe 28 in ihrer untersten Stellung, so dass keine Luftanteile mehr durch den Zweigkanal 18 strömen. Die Verstellung der beiden Schwenkklappen 34 und 36 bleibt hierbei ohne Einfluss auf die Temperatursteuerung oder Luftverteilung.

Die in den Figuren 2 bis 4 erkennbaren Klappen 44 dienen zur Luftregulierung beziehungsweise -verteilung in verschiedene Ausströmöffnungen, die in den Innenraum 24 münden.

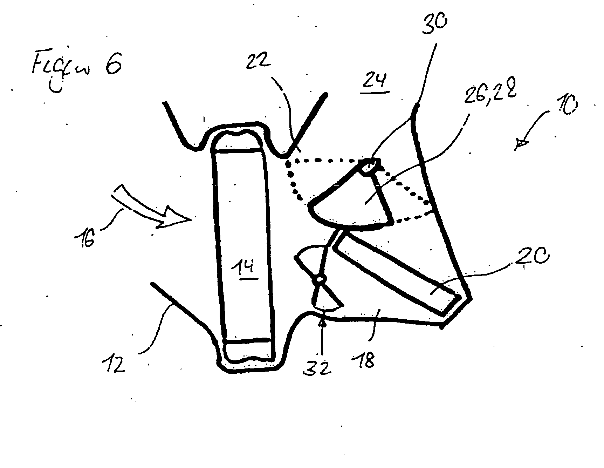

Die Figuren 5 und 6 zeigen alternative Ausgestaltungen der erfindungsgemäßen Klimatisierungsvorrichtung 10 zur zonenindividuellen Temperatursteuerung wenigstens zweier Zonen des zu klimatisierenden Innenraums 24. Figur 5 zeigt hierbei eine Variante, bei der insgesamt vier Klappen vorgesehen, wobei die erste Stelleinrichtung 26 anstelle einer verschwenkbaren Trommelklappe zwei Schwenkklappen 40 und 42 umfasst, die innerhalb des Bypasskanals 22 bzw. des Zweigkanals 18 angeordnet sind. Die im Bypasskanal 22 angeordnete obere Schwenkklappe 40 und die im Zweigkanal 18 stromaufwärts der Heizeinrichtung 20 angeordnete untere Schwenkklappe 42 der ersten Stelleinrichtung 26 sind vorzugsweise derart miteinander gekoppelt, dass bei einem verschlossenen Zweigkanal 18 der Bypasskanal 22 geöffnet ist und umgekehrt.

Die weitere Stelleinrichtung 32 ist stromabwärts der Heizeinrichtung 20 im Zweigkanal 18 angeordnet und besteht vorzugsweise in gleicher Weise wie zuvor beschrieben aus zwei Klappen, die eine zonenindividuelle Temperatur- und Warmluftsteuerung der beiden Innenraumzonen 46, 48 ermöglichen.

Figur 6 zeigt eine weitere alternative Ausgestaltung der Klimatisierungsvorrichtung 10, bei der die verstellbare Trommelklappe 28 der ersten Stelleinrichtung 26 im Luftführungskanal 12 stromabwärts der Verzweigung in Zweigkanal 18 und Bypasskanal 22 angeordnet ist. Auch hierbei ist eine zusätzliche zweiggeteilte Stelleinrichtung 32 im Zweigkanal 18 vor dem Heizkörper 20 angeordnet, welche für ein Öffnen oder Verschließen dieses Zweigkanals 18 sorgt, so dass für die beiden Klimazonen 46, 48 unterschiedliche Temperaturen einstellbar sind.

Eine alternative Variante kann vorsehen, dass von den zweigeteilten Klappen 34, 36 der zweiten Stelleinrichtung jeweils nur eine verstellbar ausgebildet ist, während die andere starr ist. Auf diese Weise können durch Verstellen der Trommelklappe 28 bzw. der oberen Schwenkklappe 40 sowie durch Verschwenken des beweglichen Teils der in einem der beiden Zweigkanäle angeordneten Klappen 34 oder 36 unterschiedliche Temperaturen für die beiden Klimazonen eingestellt werden. So kann bei einer Fahrzeugklimaanlage bspw. vorgesehen sein, dass mittels Einstellung der ersten Stelleinrichtung 26 die Temperatur für eine erste Innenraumzone vorgegeben wird, und dass erst durch zusätzliche Verstellung der zweiten Stelleinrichtung 32 eine abweichende Temperatur für eine zweite Innenraumzone einstellbar ist. Sinnvollerweise kann hierbei der Fahrer die Priorität für die erste Innenraumzone vorgeben, während einem Beifahrer die Einstellung einer davon abweichenden Temperatur überlassen sein kann.

Bei allen beschriebenen Varianten der Klimatisierungsvorrichtung 10 wird eine kinematisch aufwändige Zweiteilung einer schwenkbaren Trommelklappe vermieden, deren Schwenkachse sich im Bereich eines Verdampfers bzw. Wärmetauschers einer Kühleinrichtung befindet. Trotzdem kann durch eine relativ einfach aufgebaute zweigeteilte zusätzliche Stelleinrichtung eine zonenindividuelle Temperatursteuerung eines zu klimatisierenden Innenraums ermöglicht werden. Die erfindungsgemäße Klimatisierungsvorrichtung ermöglicht eine einfach aufgebaute und damit kostengünstige Klimasteuerung von mehreren Innenraumzonen.

## Patentansprüche

1. Klimatisierungsvorrichtung zur Klimatisierung eines Raumes, insbesondere eines Kraftfahrzeuginnenraumes, mit einer in einem Luftführungskanal (12) angeordneten Kühleinrichtung (14) und einer dieser nachgeordneten, in einem Zweigkanal (18) des Luftführungskanals (12) angeordneten Heizeinrichtung (20) sowie einem parallel zum Zweigkanal (18) verlaufenden Bypasskanal (22), und mit wenigstens einer ersten Stelleinrichtung (26) zur variablen Verteilung der Luftströmung zwischen dem Zweigkanal (18) und dem Bypasskanal (22), **dadurch gekennzeichnet, dass** sich der Luftführungskanal (12) in wenigstens zwei Zonenkanäle (46, 48) verzweigt und dass eine innerhalb des Zweigkanals (18) stromaufwärts oder stromabwärts der Heizeinrichtung (20) angeordnete weitere Stelleinrichtung (32) zur individuellen Temperatursteuerung der zwei Zonenkanäle (46, 48) vorgesehen ist, wobei die im Zweigkanal (18) angeordnete weitere Stelleinrichtung (32) wenigstens zwei unabhängig voneinander ansteuerbare schwenkbare Klappen (34, 36) umfasst, die jeweils einem Zonenkanal (46, 48) zugeordnet sind.

2. Klimatisierungsvorrichtung nach Anspruch 1, **dadurch gekennzeichnet, dass** die im Luftführungskanal (12) angeordnete erste Stelleinrichtung (26) wenigstens eine schwenkbare Klappe umfasst.

3. Klimatisierungsvorrichtung nach Anspruch 2, **dadurch gekennzeichnet, dass** die erste Stelleinrichtung (26) als schwenkbare Trommelklappe (28) ausgebildet ist.

4. Klimatisierungsvorrichtung nach Anspruch 2, **dadurch gekennzeichnet, dass** die erste Stelleinrichtung (26) zwei schwenkbare Klappen (40, 42) umfasst, die jeweils im Zweigkanal (18) bzw. im Bypasskanal (22) angeordnet und miteinander gekoppelt sind.

5. Klimatisierungsvorrichtung nach einem der Ansprüche 1 bis 4, **dadurch gekennzeichnet, dass** in einer ersten Stellung der ersten Stelleinrichtung (26) der Zweigkanal (18) mit der darin angeordneten Heizeinrichtung (20) verschlossen und der Bypasskanal (22) offen ist.

6. Klimatisierungsvorrichtung nach einem der Ansprüche 1 bis 5, **dadurch gekennzeichnet, dass** in einer zweiten Stellung der ersten Stelleinrichtung (26) der Zweigkanal (18) mit der darin angeordneten Heizeinrichtung (20) offen und der Bypasskanal (22) verschlossen ist.

7. Klimatisierungsvorrichtung nach einem der Ansprüche 1 bis 6, **dadurch gekennzeichnet, dass** mindestens eine Klappe (40, 42) der ersten Stelleinrichtung (26) über eine Kinematik mit mindestens einer Klappe (34, 36) der weiteren Stelleinrichtung (32) gekoppelt ist, wobei die gekoppelten Klappen durch einen gemeinsamen Aktuator betätigbar sind.

## Claims

1. Air-conditioning system for air conditioning a space, in particular an inside space of a motor vehicle, with a cooling device (14) arranged in an air duct (12) and a heating device (20) arranged downstream therefrom in a branch section (18) of the air duct (12), and with a bypass section (22) running parallel to the said branch (18), and with at least one first control device (26) for the variable distribution of the air flow between the said branch section (18) and the said bypass section (22), **characterised in that** the air duct (12) branches into at least two zone ducts (46, 48) and a further control device (32), arranged in the branch section (18) upstream or downstream from the heating device (20), is provided for the individual temperature control of the two zone ducts (46, 48) the said further control device (32) in the branch section (18) comprising two swivelling shutters (34, 36) that can be actuated independently of one another, each of which is associated with a respective zone duct (46, 48).

2. Air-conditioning system according to Claim 1, **characterised in that** the first control device (26) arranged in the air duct (12) comprises at least one swivelling shutter.

3. Air-conditioning system according to Claim 2, the first control device (26) is in the form of a swivelling drum shutter (28).

4. Air-conditioning system according to Claim 2, **characterised in that** the first control device (26) comprises two swivelling shutters (40, 42) arranged respectively in the branch section (18) and in the bypass section (22), which are coupled to one another.

5. Air-conditioning system according to any of Claims 1 to 4, **characterised in that** in a first position of the first control device (26) the branch section (18) with the heating device (20) in it is closed and the bypass section (22) is open.

6. Air-conditioning system according to any of Claims 1 to 5, **characterised in that** in a second position of the first control device (26) the branch section (18) with the heating device (20) in it is open and the bypass section (22) is closed.

7. Air-conditioning system according to any of Claims 1 to 6, **characterised in that** at least one shutter (40, 42) of the first control device (26) is coupled via a kinematic system to at least one shutter (34, 36) of the further control device (32), in such manner that the coupled shutters can be actuated by a common actuator.

## Revendications

1. Système de climatisation servant à la climatisation d'un espace, en particulier d'un espace d'un véhicule automobile, comprenant un dispositif de refroidissement (14) disposé dans un conduit de guidage d'air (12) et un dispositif de chauffage (20) placé en aval de ce dispositif de refroidissement et situé dans un conduit secondaire (18) du conduit de guidage d'air (12), ainsi qu'un conduit de dérivation (22) s'étendant parallèlement au conduit secondaire (18), et au moins un premier dispositif de réglage (26) servant à la répartition variable de l'écoulement d'air entre le conduit secondaire (18) et le conduit de dérivation (22), **caractérisé en ce que** le conduit de guidage d'air (12) se ramifie en au moins deux conduits de zone (46, 48) et **en ce qu'**il est prévu, à l'intérieur du conduit secondaire (18), un autre dispositif de réglage (32) disposé en amont ou en aval du dispositif de chauffage (20) et servant à la régulation individuelle de la température des deux conduits de zone (46, 48), où l'autre dispositif de réglage (32) disposé dans le conduit secondaire (18) comprend au moins deux volets pivotants (34, 36) pouvant être commandés indépendamment l'un de l'autre, volets pivotants qui sont associés respectivement à un conduit de zone (46, 48).

2. Système de climatisation selon la revendication 1, **caractérisé en ce que** le premier dispositif de réglage (26) disposé dans le conduit de guidage d'air (12) comprend au moins un volet pivotant.

3. Système de climatisation selon la revendication 2, **caractérisé en ce que** le premier dispositif de réglage (26) est configuré comme un volet pivotant à tambour (28).

4. Système de climatisation selon la revendication 2, **caractérisé en ce que** le premier dispositif de réglage (26) comprend deux volets pivotants (40, 42) qui sont disposés respectivement dans le conduit secondaire (18) ou dans le conduit de dérivation (22) et couplés l'un à l'autre.

5. Système de climatisation selon l'une quelconque des revendications 1 à 4, **caractérisé en ce que**, dans une première position du premier dispositif de réglage (26), le conduit secondaire (18) comprenant le dispositif de chauffage (20) disposé à l'intérieur dudit conduit secondaire est fermé et le conduit de dérivation (22) ouvert.

6. Système de climatisation selon l'une quelconque des revendications 1 à 5, **caractérisé en ce que**, dans une deuxième position du premier dispositif de réglage (26), le conduit secondaire (18) comprenant le dispositif de chauffage (20) disposé à l'intérieur dudit conduit secondaire est ouvert et le conduit de dérivation (22) fermé.

7. Système de climatisation selon l'une quelconque des revendications 1 à 6, **caractérisé en ce qu'**au moins un volet (40, 42) du premier dispositif de réglage (26) est couplé, par une cinématique, à au moins un volet (34, 36) de l'autre dispositif de réglage (32), où les volets couplés peuvent être commandés par un actionneur commun.
